# EUROPÄISCHE PATENTSCHRIFT

(11) **EP 1 732 349 B1**
(45) Veröffentlichungstag und Bekanntmachung des Hinweises auf die Patenterteilung: **25.09.2013**
(21) Anmeldenummer: 06007456.4
(22) Anmeldetag: 08.04.2006
(51) Int. Cl.: H04Q 9/00, G08C 17/00, G01D 4/00

(54) **Verfahren und Einrichtung zur Fernauslesung von Daten**
Method and device for remote reading of data
Procédé et dispositif destinés à la télélecture de données

(30) Priorität: 19.05.2005 DE 102005023796
(43) Veröffentlichungstag der Anmeldung: 13.12.2006
(73) Patentinhaber: Prof. Dr. Horst Ziegler und Partner GbR, 70499 Stuttgart (DE)
(72) Erfinder:
(74) Vertreter: Ostertag, Reinhard

(56) Entgegenhaltungen:
- WO-A2-03/049060
- US-A1- 2001 038 342
- US-A1- 2005 030 015

## Beschreibung

Die Erfindung betrifft ein Verfahren und eine Einrichtung zur Fernauslesung von Daten von räumlich verteilten Erfassungseinheiten gemäß dem Oberbegriff des Anspruches 1 bzw. 16.

Unter "räumlich verteilten" Erfassungseinheiten sollen hier gleichermaßen innerhalb eines Gebäudes und über auch größere Gebäudegruppen wie Dörfer und Stadtteile verteilte Erfassungseinheiten verstanden werden.

Derartige Fernausleseeinrichtungen sind zur Fernablesung von Wärmezählern und anderen Verbrauchsmessern bekannt. Sie können auch in Verbindung mit Erfassungsstellen verwendet werden, an denen Meßwerte in Gebäuden über längere Zeiträume erfasst werden.

Unter Erfassungseinheiten sollen hier auch andere Datenquellen verstanden werden als Fühler aufweisende Meßeinheiten.

Aus der WO 94/03882 sind ein Verfahren und eine Einrichtung bekannt, bei welchen für mehrere Erfassungseinheiten gemeinsam eine Ausleseeinheit vorgesehen ist, die fest im Gebäude installiert ist. Verwendet man derartige Einrichtungen, kann eine Ausleseeinheit zwar mit mehreren Erfassungseinheiten zusammenarbeiten, man braucht aber eine relativ hohe Anzahl von Ausleseeinheiten, da die Reichweite von elektromagnetischen Wellen in Gebäuden wegen der Decken und Innenwände begrenzt ist.

Würde man eine derartige Ausleseeinheit mobil auf einem außerhalb des Gebäudes verfahrbaren Kraftfahrzeug verwenden, so könnte man durch diese Ausleseeinheit zwar eine Mehrzahl von Gebäuden in größeren Abständen abfahren. Diese Lösung eignet sich aber nicht bei hohen Gebäuden und auch nicht bei Gebäuden, die nicht in der Nähe von Straßen stehen. Daher zeigt die US 2001/0038342 A1 ein unbemanntes Fluggerät, mit welverschiedene Erfassungseinheiten ausgelesen werden chem verschiedene Erfassungseinheiten ausgelesen werden. Die empfangenen Daten werden dann an eine Bodenstation übermittelt.

Durch die vorliegende Erfindung sollen ein Verfahren und eine Einrichtung zur Fernauslegung von Daten sowie eine Fernerfassungseinrichtung für Daten gemäß dem Oberbegriff des Anspruches 1 bzw. des Anspruches 16 dahingehend weitergebildet werden, dass ein preisgünstiges zumindest näherungsweise vollautomatisches Auslesen der Erfassungseinheiten ermöglicht wird.

Diese Aufgabe ist erfindungsgemäß gelöst durch ein Verfahren gemäß Anspruch 1 sowie eine Fernausleseeinrichtung mit den im Anspruch 16 angegebenen Merkmalen.

Durch die Steuerung erfolgt das Anfahren und Abfragen der verschiedenen Erfassungseinheiten vollautomatisch und unter Berücksichtigung der jeweils herrschenden Windverhältnisse.

Dabei kann man das gesamte Anfahren der verschiedenen Meßstellen gemäß einer vorgegebenen Abfolge durchführen.

Vorteilhafte Weiterbildungen der Erfindung sind in Unteransprüchen angegeben.

Kleine unbemannte Fluggeräte (Drohnen), die z. B. größeren Modellflugzeugen entsprechen können, eignen sich als preiswerte und auf einer bewährten und einigermaßen kostengünstigen Technologie aufbauende Trägergeräte, wie im Anspruch 2 bzw. 17 angegeben.

Während eine normale Drohne nur Messungen im Vorbeifliegen vornehmen kann, kann eine als Hubschrauber ausgebildete Drohne, wie sie im Anspruch 2 bzw. 18 angegeben ist, für eine Messung auch eine längere Zeit im Wesentlichen an der gleichen Stelle stehen. Dies erlaubt es, Meßstellen an einem Gebäude oder einem Gebäudekomplex in genau vorgegebener Reihenfolge abzufahren und die nächste Erfassungsstelle erst dann aufzusuchen, wenn dort ein formal korrektes und vorzugsweise auch inhaltlich plausibles Erfassungsdatenpaket erhalten wurde.

Verwendet man, wie es im Anspruch 2 bzw. 19 angegeben ist, als Trägergerät einen Zeppelin oder einen Ballon, so zeichnet sich das Trägergerät durch besonders einfachen Aufbau aus.

Die Verwendung eines öffentlichen Funknetzes zum Übertragen der Daten zwischen Erfassungseinheiten und Ausleseeinheiten und ggf. zwischen der Ausleseeinheit und einer Zentralstation, wie im Anspruch 3 und 4 bzw. 21 und 25 angegeben, hat den Vorteil, dass man auf eine gut ausgebaute Infrastruktur zurückgreifen kann. Entsprechende Funkmodems sind auch preiswert erhältlich, da sie in großen Stückzahlen gefertigt werden.

Die Übertragung der Daten vom Trägergerät an eine Zentralsammeleinheit über ein öffentliches Funknetz hat den Vorteil, dass in der Zentralsammeleinheit eine Weiterverarbeitung der Daten schon möglich ist, so lange das Trägergerät noch zum Auslesen von Erfassungseinheiten unterwegs ist.

Das Verfahren gemäß Anspruch 6 hat den Vorteil, dass auch an solchen Orten angeordnete Erfassungseinheiten ausgelesen werden können, an denen das öffentliche Funknetz für die Datenübertragung an eine Zentrale nicht verfügbar ist. Vorgzugsweise werden dann die in einem lokalen Datenspeicher gespeicherten Daten später zu einem Zeitpunkt an eine Zentralsammeleinheit übertragen, wenn das Trägergerät wieder in einen Bereich zurückkehrt, in welchem ein öffentliches Funknetz besteht.

Die Weiterbildung des Verfahrens gemäß Anspruch 7 ermöglicht es, das Anfahren zumindest der Nachbarschaft der verschiedenen Erfassungseinheiten ohne menschliches Zutun zu bewerkstelligen. Auch dies ist im Hinblick auf ein preisgünstiges Auslesen der Erfassungseinheiten von Vorteil.

Das im Anspruch 8 angegebene Verfahren zeichnet sich durch hohe Genauigkeit und Verfügbarkeit an praktisch jedem Ort aus.

Wo Koordinaten über die abzufahrenden Erfassungseinheiten nicht vorliegen, kann man gemäß Anspruch 9 die Flugbahn des Trägergerätes anhand von Luftbildern bestimmen, in denen die Gebäude erkennbar sind, in welchen sich abzulesende Erfassungseinheiten befinden.

Da bei Luftbildern die Höhe von Gebäuden schlecht abschätzbar ist, wird insgesondere beim Abfahren von Gebäuden nach Luftbildern die Höhe der Flugbahn über der Erdoberfläche durch einen Bodenradar oder ein ähnliches Abstands-Erfassungsverfahren überwacht, wie in Anspruch 11 angegeben. Die Höhe der Gebäude ist in der Regel aus amtlichen Angaben erhältlich, oft auch schon aus Informationen der Kundenkartei. Gegebenenfalls kann sie auch von eienr an Bord befindlichen Kamera bestimmt werden.

Mit der Weiterbildung der Erfindung gemäß Anspruch 11 wird erreicht, dass auch dann, wenn Soll-Koordinaten in einer Datenbank falsch enthalten sein sollten oder die momentanen Bedingungen zum Empfang von Satellitensignalen schlecht sind, gewährleistet ist, dass das flugfähige Trägergerät nicht mit einem Haus oder einem anderen Hinweis kollidiert.

Gemäß Anspruch 12 kann ein derartiges Trägergerät manuell gesteuert bewegt werden.

Das Verfahren gemäß Anspruch 13 ist dann vorteilhaft, wenn man über die abzufliegenden Gebäude nicht über detaillierte Kenntnisse aus einer Datenbank verfügt. Das Trägergerät kann dann mit einer Videokamera versehen sein, welche ihr Bild zu einem Führungsstand überträgt, von welchem aus die Fernsteuerung des Trägergertätes dann erfolgt.

Das Verfahren gemäß Anspruch 13 kann auch im Hinblick auf die Gewinnung zusätzlicher Informationen zusammen mit dem Auslesen von Erfassungseinheiten von Interesse sein.

Bei dem Verfahren gemäß Anspruch 14 wird der Weg des Trägergerätes automatisch protokolliert. Dies ist im Hinblick auf die Dokumentierung des vollständigen Abfliegens des Ableseweges aber auch im Hinblick auf sich etwa ereignende Unfälle wichtig.

Nachstehend wird die Erfindung anhand von Ausführungsbeispielen unter Bezugnahme auf die Zeichnung näher erläutert. In dieser zeigen:
- Figur 1: eine schematische Darstellung eines hohen Gebäudes, in dessen Räumen eine Vielzahl von Meßeinheiten verteilt sind, welche über eine von der Hubschrauber-Drohne getragene gemeinsame Ausleseeinheit ausgelesen werden;
- Figur 2: ein Blockschaltbild der von der Drohne getragenen Ausleseeinheit sowie einer Steuereinheit zum Bewegen der Drohne von einer Meßeinheit zur nächsten;
- Figur 3: eine ähnliche Ansicht wie Figur 1, wobei jedoch die Hubschrauber-Drohne durch eine Ballon-Drohne ersetzt ist, welche durch Motoren in ihrer Lage kontrolliert steuerbar ist;
- Figur 4: ein Flussdiagramm, anhand dessen die Bestimmung des Flugweges erfolgt, auf welchem ein Fluggerät die verschiedenen Erfassungseinheiten anfliegt; und
- Figur 5: eine schematische Aufsicht auf einen Teil einer Ortschaft, für den unter Verwendung eines Fluggerätes Erfassungseinheiten ausgelesen werden sollen.

In der Zeichnung ist mit 10 insgesamt ein hohes Gebäude mit Räumen 12 bezeichnet.

Für die Zwecke der Beschreibung sei angenommen, daß die mit 12 bezeichneten Räume des Gebäudes alle gleich groß sind und auf der in der Zeichnung sichtbaren Vorderseite, der Rückseite und den Seiten des Gebäudes in Zeilen und Spalten angeordnet sind.

In den Räumen 12 ist jeweils eine Meßeinheit 14 dargestellt, die z. B. ein Wärmeverbrauchsmesser sein kann, der an einem Heizkörper angeordnet ist. Es versteht sich, daß in einem Raum 12 auch mehr als eine Meßeinheit vorgesehen sein kann und daß eine Meßeinheit auch mit einer Mehrzahl von Fühlern zusammenarbeiten kann, die in diesem Raum verteilt sind, um Temperatur, Lichteinfall und dgl. zu überwachen.

Neben einer Meßeinheit 14 soll im vorliegenden Zusammenhang unter Erfassungseinheit auch jede andere Einheit verstanden werden, die Daten aus einem Raum oder einer Raumgruppe sammelt, um sie zur Auslesung bereitzustellen.

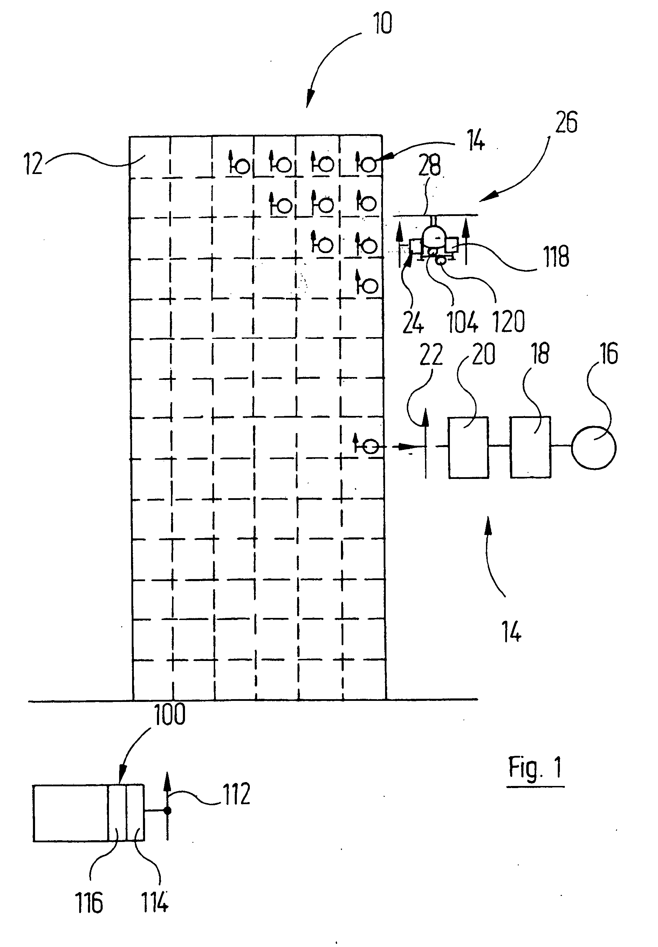

Eine Meßeinheit 14 umfasst jeweils, wie in einer Ausschnittsvergrößerung von Figur 1 gezeigt, mindestens einen Fühler 16, eine Signalverarbeitungseinheit 18, die ein Integrator sein kann, wenn es sich um eine Verbrauchsmessung handelt, sowie eine Modemeinheit 20, die mit einer Antenne 22 zusammenarbeitet. Die Modemeinheit 20 übernimmt von der Signalverarbeitungseinheit 18 die jeweils zu übermittelnden Daten, setzt diese in ein geeignetes serielles Datenformat um und moduliert mit der so erhaltenen Bitfolge das Ausgangssignal eines Oszillators, wie an sich bekannt.

Eine mit den verschiedenen Meßeinheiten 14 zusammenarbeitende Ausleseeinheit 24 ist von einem kleinen Hubschrauber 26 getragen, wie er auch als Modellhubschrauber für Hobby-Zwecke bekannt ist. Derartige Fluggeräte haben einen Rotordurchmesser von etwa 1 m und werden durch eine kleine Brennkraftmaschine von einigen 10 cm³ angetrieben.

Ein Hauptrotor 28 ist, wie bei großen Hubschraubern, über eine Taumelscheibe in zwei voneinander unabhängigen Richtungen neigbar, nämlich um eine horizontale zur Längsachse des Hubschraubers 26 senkrechte Nickachse und um eine zur Achse des Hubschraubers 26 parallele horizontale Rollachse. Der Anstellwinkel der Blätter des Rotors 28 ist einstellbar, um den Auftrieb zu vergrößern oder zu verkleinern.

Der Hubschrauber 26 hat ferner einen in der Zeichnung nicht wiedergegebenen, hinter der Zeichenebene zu denkenden Heckrotor, der das vom Hauptrotor 28 erzeugte Drehmoment ausgleicht und ebenfalls verstellbare Rotorblätter aufweist, um den Hubschrauber um seine Hochachse (Gierachse) drehen zu können.

Durch entsprechende Betätigung der Nickachsen-, Rollachsen-, Hauptrotorblatt-Neigungs- und der Heckrotorblattneigungs-Servoantriebe kann man den Hubschrauber 26 vor jede beliebige Stelle einer Außenseite des Gebäudes 10 stellen.

In dieser Stellung ist dann die elektromagnetische Kopplung zwischen den Meßeinheiten 14 und der Ausleseeinheit 24 so groß, daß ein Datenaustausch erfolgen kann. Dadurch, daß man die Außenwände der verschiedenen Räume 12 nacheinander anfährt, kann man somit sämtliche Daten aus den Meßeinheiten 14 auslesen.

Dieses Auslesen erfolgt im einzelnen so, wie in der eingangs angesprochenen WO 94/03882 A beschrieben.

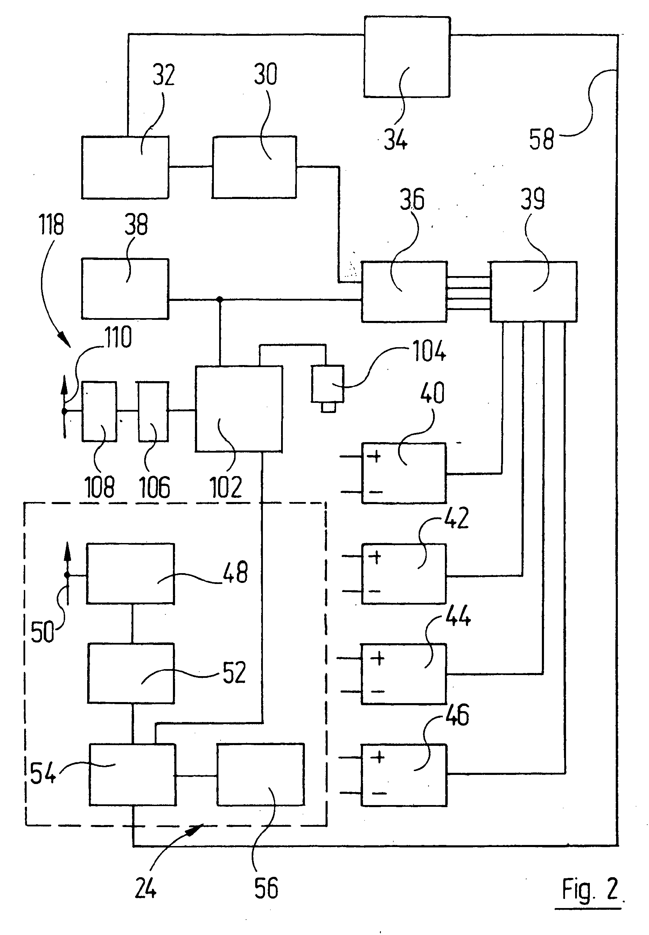

Das Anfahren der verschiedenen Meßeinheiten kann in Kenntnis der Gebäudegeometrie so erfolgen, daß man die verschiedenen Auslesestellungen für den Hubschrauber in einem Speicher ablegt und diese gespeicherten Sollstellungspositionen sukzessive in einen automatischen Piloten einspeist, wie nachstehend unter Bezugnahme auf Figur 2 näher beschrieben wird.

In Figur 2 ist ein diese Sollstellungen enthaltender Speicher mit 30 bezeichnet. Seine Adressierung erfolgt über einen Adressierkreis 32, der von einem zentralen Prozessor 34 des Autopiloten gesteuert wird.

Das jeweils ausgewählte Sollstellungssignal, welches am Ausgang des Speichers 30 steht, wird auf den einen Eingang eines Fehlerkreises 36 gegeben, dessen anderer Eingang mit dem Ausgang einer GPS-Einheit 38 verbunden ist. Diese ist als Teil des Autopiloten ebenfalls vom Hubschrauber 26 getragen und gibt dessen momentane IstStellung wieder.

Aus der durch Vergleich von Sollstellungssignal und Iststellungssignal erhaltenen Lageabweichung berechnet der Fehlerkreis 36 vier Fehlersignale für den Nickwinkel, den Rollwinkel, den Hauptrotor-Blattanstellwinkel und den Heckrotorblatt-Anstellwinkel. Mit diesen Signalen ist ein Korrekturrechner 39 beaufschlagt, und durch dessen Ausgänge werden entsprechende Servo-Steuerkreise 40, 42, 44 und 46 beaufschlagt, an deren Ausgängen jeweils ein den jeweiligen Winkel erhöhendes Signal ("plus") bzw. ein diesen Winkel erniedrigendes Signal ("minus") bereitgestellt werden.

Wie aus Figur 2 ersichtlich, hat die Ausleseeinheit 14 ein Modemteil 48, welches mit einer Antenne 50 zusammenarbeitet. Das Modemteil 48 ist über ein Interface 52 mit einem Prozessor 54 gekoppelt, der mit einem Schreib-/Lesespeicher 56 zusammenarbeitet, in welchem die von den Meßeinheiten 14 erhaltenen Datenpakete abgelegt werden.

Über eine Leitung 58 überstellt der Prozessor 54 der Ausleseeinheit 20 an den Prozessor 34 des Autopiloten dann ein Signal, wenn von derjenigen Meßeinheit, die an der gerade anzufahrenden Gebäudestelle angebracht ist, ein formal gültiges fehlerfreies und inhaltlich plausibles Datenpaket erhalten wurde. Bei Erhalt eines solchen Signales schaltet der Prozessor 34 den Adressierkreis 32 um eins weiter, so daß dann das dem nächsten anzufahrenden Raum entsprechende Sollstellungsignal an einem Eingang des Fehlerkreises 36 ansteht.

Wegen der größeren räumlichen Überlappung der elektromagnetischen Kopplung zwischen Meßeinheiten 14 und Auswerteeinheit 24 wird dies in der Regel schon dann der Fall sein, wenn der Hubschrauber 26 die entsprechende Sollstellung noch gar nicht erreicht hat.

Zum Datenaustausch mit einer Zentrale 100 verfügt die Elektronik des Hubschraubers 26 ferner über einen Prozessor 102, der mit der GPS-Einheit 38, dem Prozessor 34 und einer Videokamera 104 verbunden ist.

Letzere ist vom Hubschrauber 26 durch Funk von der Zentrale 100 steuerbar getragen und kann insbesondere den in Flugrichtung vor dem Hubschrauber liegenden Raum aufnehmen, wenn dieser nicht nach Sollkoordinaten angesteuert werden kann.

Vom Prozessor 34 kann der Prozessor 102 Teilmengen der erfaßten Daten schon während des Fluges abrufen und an die Zentrale 100 übermitteln, so daß die Weiterverarbeitung dort schon während des Fluges erfolgen kann. Für manche Messungen kann so auch das weitere Flugprogramm in Abhängigkeit von den schon gewonnenen Daten variiert werden.

Die vom Prozessor 102 an die Zentrale 100 übermittelten Istpositionen des Hubschraubers 26 können zu Kontrollzwecken dort archiviert werden.

Die Datenübermittlung vom Prozessor 102 zur Zentrale 100 erfolgt hubschrauberseitig durch ein Interface 106, ein Modemteil 108 und eine Antenne 110, auf der Seite der Zentrale 100 durch eine Antenne 112, ein Modemteil 114 und ein Interface 116.

Die Komponenten 102, 106, 108 bilden zusammen eine Übertragungseinheit 118.

Auf die weiter oben beschriebene Weise werden die verschiedenen Meßeinheiten 40 von der Außenseite des Gebäudes her ausgelesen, ohne daß ein Zutritt zum Gebäudeinneren, insbesondere auch nicht zu den einzelnen Räumen notwendig wäre.

Dabei kann in Abwandlung so verfahren werden, daß der Prozessor 54 nach dem Abspeichern eines Datenpaketes an die nächste anzufahrende Meßeinheit eine Reihe von Aktivierungssignalen sendet, durch welchen diese Meßeinheit von einem stromsparenden Hörzustand in einen mehr Strom benötigenden Sendezustand umgeschaltet werden kann, und dies so lange, bis eine Antwort von dieser Meßeinheit erhalten wird.

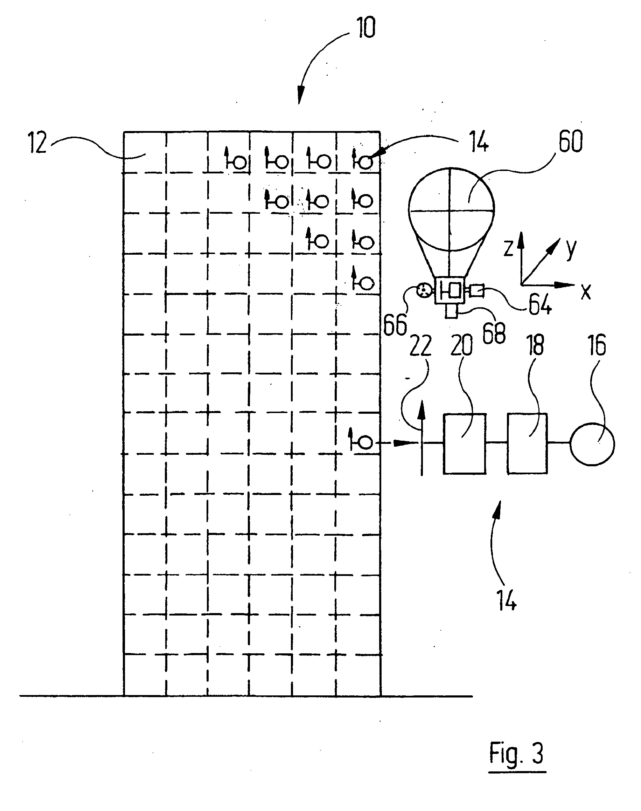

Beim Ausführungsbeispiel nach Figur 3 ist die Ausleseeinheit 22 von einem Ballon 60 getragen, der durch drei Schubeinheiten 62, 64 und 66 in den drei Koordinatenrichtungen bewegbar ist. Diese Schubeinheiten können jeweils einen Motor und einen Propeller mit verstellbarem Blatt umfassen.

Dieses Trägergerät für die Ausleseeinheit 24 arbeitet im einzelnen ähnlich wie obenstehend für den Hubschrauber 26 unter Bezugnahme auf Figur 2 dargelegt.

In weiterer Abwandlung kann man eine Zeppelindrohne verwenden, die abgesehen von der Form des Auftriebskörpers und der steuerbaren Ruder ähnlich arbeitet wie der vorstehend beschriebene Ballon 60.

Die oben unter Bezugnahme auf ein einzelnes Gebäude beschriebene Methode zum Ablesen von Meßeinheiten 14 eignet sich besonders gut auch zum Auslesen von Dörfern, Stadtteilen und ganzen Städten.

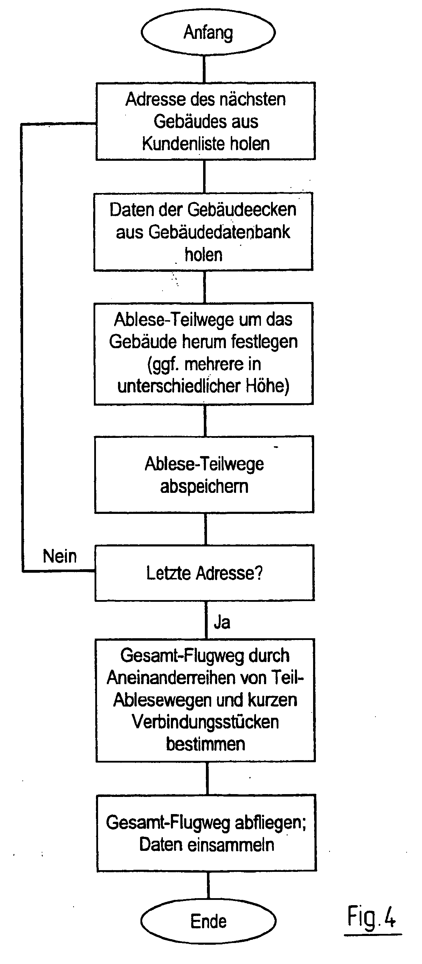

Gemäß dem in Figur 4 dargestellten Flußdiagramm kann man die Soll-Flugbahn eines Fluggerätes, die letzteres ausreichend nahe an die verschiedenen Meßeinheiten heranbringt, wie folgt bestimmen:

Ausgehend von der Kundenkartei des Versorgungsunternehmens wird eine erste Adresse der Adressenliste eingelesen. Für diese Adressen werden aus einer öffentlichen Datenbank, z. B. derjenigen des lokalen Baurechtsamtes, die Gebäude-Kenndaten abgerufen. Aus diesen ergeben sich die absolute Höhe der Gebäudedecken über Meereshöhe sowie die Lagen der Gebäudeecken.

Unter Berücksichtigung des Installationsplanes für die verschiedenen Meßeinheiten wird nun zunächst festgelegt, welche Stellen vor der Außenwand des Gebäudes das Fluggerät anfliegen muß, um in ausreichenden Funkkontakt mit den im Gebäude angeordneten Meßeinheiten treten zu können.

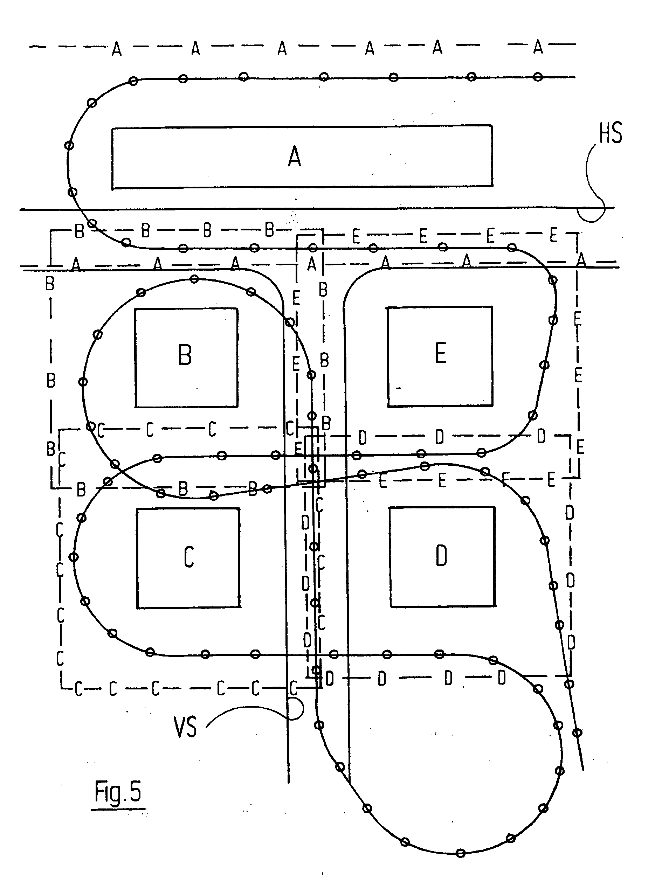

Die Grenzen der Auslesbarkeit der Erfassungseinheiten sind in Figur 5 für verschiedene Gebäude A, B, C, D, E als gestrichelte Linien eingezeichnet, die in Unterbrechungen den Buchstaben des zugehörigen Gebäudes tragen.

Mit HS ist eine in Figur 5 horizontal verlaufende Straße, mit VS eine in Figur 5 vertikal verlaufende Straße bezeichnet.

Die entsprechenden Teilwege, die zu den verschiedenen Meßeinheiten führen, werden innerhalb der Auslesbarkeitsbereiche bestimmt und in einem Speicher abgelegt. Typischerweise wird es sich um gerade Strecken oder Kreisbogen handeln, die unter gewissem Abstand vor den Fenstern eines Geschosses vorbeiführen.

Es wird nun geprüft, ob schon die letzte Adresse der Kundendatei erreicht ist. Ist dies nicht der Fall, wird die nächste Adresse aus der Adressdatei geholt und die obenstehend beschriebenen Schritte werden wiederholt.

In einem weiteren Schritt wird dann ein Gesamtflugweg so aus den verschieden abgespeicherten Teil-Ablesewegen zusammengesetzt, daß nur möglichst kurze nicht Auslesezwecken dienende Verbindungsstücke benötigt werden.

Ein denkbarer solcher Gesamtflugweg ist in Figur 5 durch eine ausgezogene Linien mit kleinen Markierkreisen dargestellt.

Nachdem so der Gesamt-Flugweg festgelegt ist, wird dieser abgeflogen und die von den einzelnen Meßeinheiten bereitgestellten Daten werden wie oben beschrieben eingesammelt.

Um diese Daten schon abarbeiten zu können, bevor das Fluggerät wieder an die Ausgangsstelle zurückkehrt, ist das Fluggerät mit der Übertragungseinheit 118 versehen, welche zur Datenübertragung über ein öffentliches Funknetz befähigt ist. Typischerweise kann diese hierbei ein Modemteil umfassen, wie es auch für Telekommunikation verwendet wird, insbesondere ein UMTS-Modemteil. Die von der Übertragungseinheit 118 laufend oder in bestimmten Abständen abgesandten Daten, die aus seit der letzten Datenübermittlung ausgelesenen Empfangseinheiten stammen, werden von der Zentrale 100 entgegengenommen. Diese kann die Daten dann schon während des weiteren Auslesens von Meßeinheiten verarbeiten, z. B. Rechnungen erstellen, mit denen die Verbräuche der einzelnen Kunden abgerechnet werden.

Um sicherzustellen, daß sich im Wege des Funkgerätes keine seit der letzten Erfassung der Gebäude hinzugekommene Gebäude oder sonstige Hindernisse befinden, ist das Fluggerät mit einem Rundumradar 120 versehen, der die Bewegung des Fluggerätes sofort unterbricht oder eine Ausweichbewegung herbeiführt, wenn sich in einem vorgegebenen Umkreis um das Fluggerät ein Hindernis befindet. Ersteres im Fall eines Hubschraubers oder eines Zeppelins oder Ballons. Für den Fall eines Flugzeuges wird eine geeignete Ausweichbewegung ermittelt, ggf.

unter Zuhilfenahme der vom Fluggerät getragenen Videokamera 104, die ebenfalls über die Übertragungseinheit 118 2 mit der Zentrale 100 verbunden ist, wo sich ein Führungsstand befindet, über welchen eine Fernsteuerung des Fluggerätes erfolgen kann.

Die Erfindung macht davon Gebrauch, daß die Funksignale von Erfassungseinheiten wie Verbrauchszählern Gebäude über die Fenster sehr effektiv verlassen können, während sie aufgrund der meist dicken tragenden Mauern Ausleseeinheiten schwerer erreichen, die in einem Treppenhaus angeordnet sind.

Die Erfindung ermöglicht es, auch bei solchen Gebäuden eine Außenablesung von Meßeinheiten durchzuführen, welche größere Gebäudehöhe aufweisen und bei denen die Wohnungen nicht einseitig auf einer Gebäudeseite angeordnet sind. Dies ist deshalb möglich, weil die flugfähigen Trägergeräte wie Kleinhubschrauber, kleiner motorisierter Zeppelin oder Ballon automatisch mit GPS-Navigation und/oder Funksteuerung eine vorgegebene (dreidimensionale) Strecke abfliegen, die so gewählt ist, daß die Ausleseeinheit die Funksignale aller auszulesender Meßeinheiten empfängt.

Die empfangenen Daten können dann, wie dargelegt, über ein Funkmodem an eine zentrale Sammeleinheit abgegeben werden. Letztere kann über das Funkmodem in umgekehrter Richtung die Steuerung und/oder die Vorgabe des Flugweges übernehmen.

Der Flugweg kann durch Variation der Flughöhe, insbesondere auch bei Hochhäusern, alle Stockwerke umfassen. Durch Umfliegen von Gebäuden können die in unterschiedliche Richtung zeigenden Wohnungen und Wohnungseinrichtungen erfasst werden.

Erfasst man die genauen dreidimensionalen geographischen Ortskoordinaten aller Meßeinheiten (z. B. so, wie in der EP 1 342 220 angegeben), kann die Planung der Flugroute vollautomatisch erfolgen.

Sind noch nicht alle genauen dreidimensionalen Ortskoordinaten der einzelnen Meßeinheiten bekannt, so lassen sich zumindest einige rohe Koordinaten der Gebäude anhand der Anschriften aus öffentlichen Datenbanken bestimmen. Der Flug erfolgt dann automatisch nach einem so bestimmten GPS-Plankurs, wobei man durch Wahl ausreichenden Sicherheitsabstandes auch berücksichtigt, daß das derzeitige Satellitenortungssystem noch Ungenauigkeiten aufweist. Diese Ungenauigkeiten werden durch Einführung höhere Präzision aufweisender Satellitensysteme weiter verringert werden.

Alternativ oder zusätzlich lassen sich durch verfügbare hochauflösende Satellitenaufnahmen mit Koordinaten-Referenzen brauchbare Wege für die anzufliegenden Gebäude unter Vermeidung von Hindernissen wie Bäumen, Masten und Leitungen auch einmalige interaktiv am PC einer Zentrale festlegen.

Eine weitere Möglichkeit der Bestimmung von Koordinaten ist die laufende Übertragung von Bilddaten aus dem Fluggerät heraus zur Zentrale. Hierzu kann insbesondere eine UMTS-Datenübertragungsstrecke verwendet werden, die ausreichende Bandbreite hat. Auf der Basis dieser Bilder kann dann das Fluggerät manuell interaktiv gesteuert werden.

Den obigen Ausführungsbeispielen ist gemeinsam, daß sie die Auslesung einer Vielzahl von Meßeinheiten im

Inneren eines hohen Gebäudes ermöglichen, ohne daß ein Zugang zum Gebäudeinneren benötigt wird. Auf der Außenseite des Gebäudes sind keine nennenswerten baulichen Maßnahmen zu treffen.

Unter Verwendung der erfindungsgemäßen Ausleseeinrichtung läßt sich somit die Auslesung der in einem Gebäude installierten Meßeinheiten preisgünstig und rasch mit nur geringem Personaleinsatz erledigen.

Entsprechendes gilt für die Auslesung von in Dörfern, Stadtteilen oder Städten installierten Meßeinheiten.

## Patentansprüche

1. Verfahren zur Fernauslesung von Daten aus einer Vielzahl räumlich verteilter Erfassungseinheiten (14) unter Verwendung einer Ausleseeinheit (24), welche über eine drahtlose Datenübertragungsstrecke (20, 22, 48, 50) mit den Erfassungseinheiten (14) zusammenarbeiten kann, wobei die Ausleseeinheit (24) unter Verwendung eines flugfähigen steuerbaren Trägergerätes (26; 60) in die Nachbarschaft der Erfassungseinheiten (14) bewegt wird und dort von mindestens einer der Erfassungseinheiten (14) stammende Daten empfängt und wobei das flugfähige Trägergerät (26; 60) eine vorgegebene Flugbahn mindestens näherungsweise vollautomatisch abfliegt,
**dadurch gekennzeichnet, dass**
sich das Trägergerät (26; 60) in die Nachbarschaft der nächsten Erfassungseinheit (14) bewegt, wenn die Ausleseeinheit (24) ein formal fehlerfreies Datenpaket erhalten hat.

2. Verfahren nach Anspruch 1, **dadurch gekennzeichnet, dass** die Ausleseeinheit (24) durch ein Kleinflugzeug, einen Kleinhubschrauber (26), einen Zeppelin oder einen Ballon (60) bewegt wird.

3. Verfahren nach Anspruch 1 oder 2, **dadurch gekennzeichnet, dass** die drahtlose Datenübertragungsstrecke (20, 22, 48, 50) mindestens einen Funkkanal eines öffentlichen Funknetzes aufweist.

4. Verfahren nach einem der Ansprüche 1 bis 3, **dadurch gekennzeichnet, dass** die Ausleseeinheit (24) zumindest einen Teil der empfangenen Daten über ein öffentliches Funknetz (108-114) an eine zentrale Sammelstation (100) überträgt.

5. Verfahren nach Anspruch 4, **dadurch gekennzeichnet, dass** eine Weiterverarbeitung der Daten in der Zentraleinheit (100) schon erfolgt, so lange das Trägergerät (26; 60) noch zum Auslesen von Erfassungseinheiten (14) unterwegs ist.

6. Verfahren nach einem der Ansprüche 1 bis 5, **dadurch gekennzeichnet, dass** die Ausleseeinheit (24) zumindest einen Teil der empfangenen Daten in einem lokalen Datenspeicher (56) speichert.

7. Verfahren nach einem der Ansprüche 1 bis 6, **dadurch gekennzeichnet, dass** die Bewegung des flugfähigen Trägergerätes (26; 60) so erfolgt, dass seine geographischen Ist-Koordinaten vergleichen werden.

8. Verfahren nach Anspruch 7, **dadurch gekennzeichnet, dass** die Ist-Koordinaten des flugfähigen Trägergerätes (26; 60) mittels Satellitennavigation bestimmt werden.

9. Verfahren nach einem der Ansprüche 1 bis 8, **dadurch gekennzeichnet, dass** die Flugbahnvorgabe anhand von Luftbildern, insbesondere Satellitenaufnahmen von Gebäuden erfolgt, in denen die abzulesenden Erfassungseinheiten (14) angeordnet sind.

10. Verfahren nach Anspruch 9, **dadurch gekennzeichnet, dass** der Abstand des Trägergerätes (26; 60) von der Erdoberfläche durch eine Höhenmesseinrichtung gemessen wird.

11. Verfahren nach Anspruch 9 oder 10, **dadurch gekennzeichnet, dass** der seitliche Abstand des Trägergerätes (26; 60) von Hindernissen durch einen Rundum-Abstandsfühler überwacht wird.

12. Verfahren nach einem der Ansprüche 1 bis 11, **dadurch gekennzeichnet, dass** das flugfähige Trägergerät (26; 60) per Funk fernsteuerbar ist.

13. Verfahren nach einem der Ansprüche 1 bis 12, **dadurch gekennzeichnet, dass** das flugfähige Trägergerät (26; 60) Bilder seiner Umgebung, insbesondere in Flugrichtung aufgenommene derartige Bilder, über ein öffentliches Funknetz (108-114) vorzugsweise eine UMTS-Strecke, an eine Zentrale (100) überträgt.

14. Verfahren nach einem der Ansprüche 1 bis 13, **dadurch gekennzeichnet, dass** die Ist-Position des Trägergerätes (26; 60) laufend aufgezeichnet wird.

15. Verfahren nach Anspruch 14, **dadurch gekennzeichnet, dass** die Ist-Position des Trägergerätes (26; 60) laufend über ein öffentliches Funknetz (108-114), vorzugsweise eine UMTS-Strecke an eine Zentrale (100) übermittelt wird.

16. Einrichtung zur Fernauslesung von Daten aus einer Vielzahl räumlich verteilter Erfassungseinheiten (14), welche jeweils eine Signalquelle (16) und eine Modemeinheit (20) umfassen, mit einer Ausleseeinheit (24), welche über eine drahtlose Datenübertragungsstrecke (20, 22, 48, 50) mit den Erfassungseinheiten (14) zusammenarbeiten kann, wobei die Ausleseeinheit (24) auf einem im Raum verstellbaren Trägergerät (26; 60) angeordnet ist, das durch eine Steuerung (30 bis 46) für einen auf das Trägergerät (26; 60) arbeitenden Richtungs-Stellantrieb gesteuert wird, welche umfasst: Einen Sollstellungsspeicher (39), Mittel (40) zum Erfassen oder Iststellung des Trägergerätes (26; 60) und einen Fehlerkreis (36), der das Ausgangssignal der Mittel (38) zur Bestimmung der Iststellung und ein ausgewähltes Sollstellungssignal aus dem Sollstellungsspeicher (30) erhält und das Trägergerät (26, 60) so steuert, dass das Iststellungssignal auf das ausgewählte Sollstellungssignal zuläuft,
**dadurch gekennzeichnet, dass**
ein Sollstellungs-Auswählkreis (32, 34) durch ein Ausgangssignal der Ausleseeinheit (24) dann weitergeschaltet wird, wenn von der Ausleseeinheit (24) ein formal fehlerfreies und vorzugsweise auch inhaltlich plausibles Datenpaket erhalten wurde, wodurch der Sollstellungsspeicher (30) an seinem Datenausgang das nächste Sollstellungssignal bereitstellt.

17. Einrichtung nach Anspruch 16, **dadurch gekennzeichnet, dass** das Trägergerät durch eine Drohne (26) gebildet ist.

18. Einrichtung nach Anspruch 17, **dadurch gekennzeichnet, dass** die Drohne ein Hubschrauber (26) ist.

19. Einrichtung nach Anspruch 17, **dadurch gekennzeichnet, dass** das Trägergerät einen mit leichtem Gas gefüllten Auftriebskörper (60) umfasst.

20. Einrichtung nach Anspruch 19, **gekennzeichnet durch** steuerbare Motoren (62 bis 66) zum Bewegen des Auftriebskörpers (60) in unterschiedlichen Koordinatenrichtungen.

21. Einrichtung nach einem der Ansprüche 16 bis 20, **dadurch gekennzeichnet, dass** das Trägergerät (26; 60) eine Kamera (104) trägt, die über eine Datenübertragungsstrecke (108-114), vorzugsweise eine UMTS-Strecke, mit einer Zentrale (100) verbindbar ist.

22. Einrichtung nach einem der Ansprüche 16 bis 21, **dadurch gekennzeichnet, dass** die Ausleseeinheit (24) über eine Datenübertragungsstrecke (108-114) vorzugsweise eine UMTS-Strecke, mit einer Zentrale (100) verbindbar ist.

## Claims

1. Method for remote read-out of data from a plurality of spatially distributed acquisition units (14) using a read-out unit (24) which is able to co-operate with the acquisition units (14) via a wireless data transmission link (20, 22, 48, 50), wherein the read-out unit (24) is moved, using a flight-capable controllable carrier appliance (26; 60), into the vicinity of the acquisition units (14) and there receives data originating from at least one of the acquisition units (14), and wherein the flight-capable carrier appliance (26; 60) flies a predetermined trajectory at least approximately in fully automated manner,
**characterised in that**
the carrier appliance (26; 60) moves into the vicinity of the next acquisition unit (14) when the read-out unit (24) has received a formally error-free data packet.

2. Method according to Claim 1, **characterised in that** that the read-out unit (24) is moved by a small aeroplane, a small helicopter (26), a zeppelin or a balloon (60).

3. Method according to Claim 1 or 2, **characterised in that** the wireless data transmission link (20, 22, 48, 50) exhibits at least one radio channel of a public radio network.

4. Method according to one of Claims 1 to 3, **characterised in that** the read-out unit (24) transmits at least a portion of the received data to a central collecting station (100) via a public radio network (108-114).

5. Method according to Claim 4, **characterised in that** a further processing of the data in the central processing unit (100) is undertaken so long as the carrier appliance (26; 60) is still in transit to the read-out of acquisition units (14).

6. Method according to one of Claims 1 to 5, **characterised in that** the read-out unit (24) stores at least a portion of the received data in a local data memory (56).

7. Method according to one of Claims 1 to 6, **characterised in that** the movement of the flight-capable carrier appliance (26; 60) occurs in such a way that its actual geographical coordinates are compared.

8. Method according to Claim 7, **characterised in that** the actual coordinates of the flight-capable carrier appliance (26; 60) are determined by means of satellite navigation.

9. Method according to one of Claims 1 to 8, **characterised in that** the presetting of the trajectory is undertaken on the basis of aerial photographs, in particular satellite images of buildings in which the acquisition units (14) to be read have been arranged.

10. Method according to Claim 9, **characterised in that** the distance of the carrier appliance (26; 60) from the surface of the earth is measured by an altitude-measuring device.

11. Method according to Claim 9 or 10, **characterised in that** the lateral distance of the carrier appliance (26; 60) from obstacles is monitored by a panoramic distance sensor.

12. Method according to one of Claims 1 to 11, **characterised in that** the flight-capable carrier appliance (26; 60) is capable of being remote-controlled by radio.

13. Method according to one of Claims 1 to 12, **characterised in that** the flight-capable carrier appliance (26; 60) transmits images of its surroundings, in particular such images recorded in the direction of flight, to a central station (100) via a public radio network (108-114), preferentially a UMTS link.

14. Method according to one of Claims 1 to 13, **characterised in that** the actual position of the carrier appliance (26; 60) is constantly recorded.

15. Method according to Claim 14, **characterised in that** the actual position of the carrier appliance (26; 60) is constantly transmitted to a central station (100) via a public radio network (108-114), preferentially a UMTS link.

16. Device for remote read-out of data from a plurality of spatially distributed acquisition units (14) which each include a signal source (16) and a modem unit (20), with a read-out unit (24) which is able to co-operate with the acquisition units (14) via a wireless data transmission link (20, 22, 48, 50), wherein the read-out unit (24) has been arranged on a carrier appliance (26; 60) which is capable of being repositioned in space and which is controlled by a controller (30 to 46) for a directional servo drive operating on the carrier appliance (26; 60), said controller comprising: a desired-position memory (39), means (40) for acquiring or actual position of the carrier appliance (26; 60), and an error circuit (36) which receives the output signal of the means (38) for determining the actual position and a selected desired-position signal from the desired-position memory (30) and controls the carrier appliance (26; 60) in such a way that the actual-position signal rapidly approaches the selected desired-position signal,
**characterised in that**
a desired-position selection circuit (32, 34) is advanced by an output signal of the read-out unit (24) when a formally error-free data packet which is preferentially also plausible in terms of content has been received by the read-out unit (24), as a result of which the desired-position memory (30) makes the next desired-position signal available at its data output.

17. Device according to Claim 16, **characterised in that** the carrier appliance is constituted by a drone (26).

18. Device according to Claim 17, **characterised in that** the drone is a helicopter (26).

19. Device according to Claim 17, **characterised in that** the carrier appliance includes a lifting body (60) filled with a light gas.

20. Device according to Claim 19, **characterised by** controllable motors (62 to 66) for moving the lifting body (60) in different coordinate directions.

21. Device according to one of Claims 16 to 20, **characterised in that** the carrier appliance (26; 60) carries a camera (104) which is capable of being connected to a central station (100) via a data transmission link (108-114), preferentially a UMTS link.

22. Device according to one of Claims 16 to 21, **characterised in that** the read-out unit (24) is capable of being connected to a central station (100) via a data transmission link (108-114), preferentially a UMTS link.

## Revendications

1. Procédé pour le relevé à distance de données à partir d'une pluralité d'unités d'enregistrement spatialement réparties (14), en utilisant une unité de relevé (24) qui peut coopérer avec les unités d'enregistrement (14) par l'intermédiaire d'un circuit de transmission de données sans fil (20, 22, 48, 50), sachant que l'unité de relevé (24) est déplacée dans le voisinage des unités d'enregistrement (14) en utilisant un appareil porteur volant gouvernable (26 ; 60) et y reçoit des données provenant d'au moins une des unités d'enregistrement (14), et sachant que l'appareil porteur volant (26; 60) vole de manière au moins approximativement entièrement automatique sur une trajectoire de vol allouée,
**caractérisé en ce que** l'appareil porteur (26 ; 60) se déplace dans le voisinage de l'unité d'enregistrement suivante (14) lorsque l'unité de relevé (24) a reçu un paquet de données sans défaut sur le plan de la forme.

2. Procédé selon la revendication 1, **caractérisé en ce que** l'unité de relevé (24) est déplacée par un avion miniature, un hélicoptère miniature (26), un zeppelin ou un ballon (60).

3. Procédé selon la revendication 1 ou 2, **caractérisé en ce que** le circuit de transmission de données sans fil (20, 22, 48, 50) présente au moins un canal radio d'un réseau radio public.

4. Procédé selon l'une des revendications 1 à 3, **caractérisé en ce que** l'unité de relevé (24) transmet au moins une partie des données reçues à une station centrale de collecte (100) par l'intermédiaire d'un réseau radio public (108-114).

5. Procédé selon la revendication 4, **caractérisé en ce que** le traitement des données dans l'unité centrale (100) s'effectue déjà alors que l'appareil porteur (26 ; 60) est encore en route pour relever des unités d'enregistrement (14).

6. Procédé selon l'une des revendications 1 à 5, **caractérisé en ce que** l'unité de relevé (24) mémorise au moins une partie des données reçues dans une mémoire de données locale (56).

7. Procédé selon l'une des revendications 1 à 6, **caractérisé en ce que** le déplacement de l'appareil porteur volant (26 ; 60) s'effectue de telle sorte que ses coordonnées réelles géographiques sont contrôlées.

8. Procédé selon la revendication 7, **caractérisé en ce que** les coordonnées réelles de l'appareil porteur volant (26 ; 60) sont déterminées par navigation par satellite.

9. Procédé selon l'une des revendications 1 à 8, **caractérisé en ce que** l'allocation de la trajectoire de vol s'effectue à l'aide de photographies aériennes, en particulier de prises de vue par satellite de bâtiments dans lesquels sont disposées les unités d'enregistrement (14) à relever.

10. Procédé selon la revendication 9, **caractérisé en ce que** la distance entre l'appareil porteur (26 ; 60) et la surface du sol est mesurée par un dispositif de mesure d'altitude.

11. Procédé selon la revendication 9 ou 10, **caractérisé en ce que** la distance latérale entre l'appareil porteur (26 ; 60) et des obstacles est surveillée par un détecteur de distance panoramique.

12. Procédé selon l'une des revendications 1 à 11, **caractérisé en ce que** l'appareil porteur volant (26 ; 60) peut être commandé à distance par radio.

13. Procédé selon l'une des revendications 1 à 12, **caractérisé en ce que** l'appareil porteur volant (26 ; 60) transmet des photographies de son environnement, en particulier des photographies prises dans la direction de vol, à une centrale (100) par l'intermédiaire d'un réseau radio public (108-114), de préférence un circuit UMTS.

14. Procédé selon l'une des revendications 1 à 13, **caractérisé en ce que** la position réelle de l'appareil porteur (26 ; 60) est enregistrée en continu.

15. Procédé selon la revendication 14, **caractérisé en ce que** la position réelle de l'appareil porteur (26 ; 60) est transmise en continu à une centrale (100) par l'intermédiaire d'un réseau radio public (108-114), de préférence un circuit UMTS.

16. Dispositif pour le relevé à distance de données à partir d'une pluralité d'unités d'enregistrement spatialement réparties (14) qui comprennent chacune une source de signaux (16) et une unité modem (20), avec une unité de relevé (24) qui peut coopérer avec les unités d'enregistrement (14) par l'intermédiaire d'un circuit de transmission de données sans fil (20, 22, 48, 50), sachant que l'unité de relevé (24) est disposée sur un appareil porteur (26 ; 60) qui peut être déplacé dans l'espace et qui est commandé par une commande (30 à 46) pour un servomoteur directionnel actif sur l'appareil porteur (26 ; 60), ladite commande comprenant une mémoire de positions de consigne (30), des moyens (38) pour enregistrer la position réelle, et un circuit d'erreurs (36) qui reçoit le signal de sortie des moyens (38) destinés à déterminer la position réelle et un signal sélectionné de position de consigne provenant de la mémoire de positions de consigne (30), et qui commande l'appareil porteur (26 ; 60) de telle sorte que le signal de position réelle va vers le signal sélectionné de position de consigne,
**caractérisé en ce qu'**un circuit (32, 34) de sélection de position de consigne est, par un signal de sortie de l'unité de relevé (24), incrémenté lorsque l'unité de relevé (24) a reçu un paquet de données sans défaut sur le plan de la forme et de préférence également plausible sur le plan du contenu, de sorte que la mémoire de positions de consigne (30) fournit à sa sortie de données le signal suivant de position de consigne.

17. Dispositif selon la revendication 16, **caractérisé en ce que** l'appareil porteur est formé par un drone (26).

18. Dispositif selon la revendication 17, **caractérisé en ce que** le drone est un hélicoptère (26).

19. Dispositif selon la revendication 17, **caractérisé en ce que** l'appareil porteur comprend un corps de sustentation (60) rempli d'un gaz léger.

20. Dispositif selon la revendication 19, **caractérisé par** des moteurs gouvernables (62 à 66) pour déplacer le corps de sustentation 60) dans différentes directions de coordonnées.

21. Dispositif selon l'une des revendications 16 à 20, **caractérisé en ce que** l'appareil porteur (26 ; 60) porte un appareil photographique (104) qui peut être relié à une centrale (100) par l'intermédiaire d'un circuit de transmission de données (108-114), de préférence un circuit UMTS.

22. Dispositif selon l'une des revendications 16 à 21, **caractérisé en ce que** l'unité de relevé (24) peut être reliée à une centrale (100) par l'intermédiaire d'un circuit de transmission de données (108-114), de préférence un circuit UMTS.
